# EUROPÄISCHE PATENTSCHRIFT

(11) **EP 2 555 178 B1**
(45) Veröffentlichungstag und Bekanntmachung des Hinweises auf die Patenterteilung: **21.02.2018**
(21) Anmeldenummer: 12002858.4
(22) Anmeldetag: 24.04.2012
(51) Int. Cl.: G08G 1/16, G06K 9/00

(54) **Verfahren zum Erfassen von Objekten seitlich eines Nutzfahrzeugs und Nutzfahrzeug mit einem Erfassungssystem zum Ausführen des Verfahrens**
Method for detecting objects to the side of a commercial vehicle and commercial vehicle with a detection system for performing the method
Procédé de détection d'objets placés sur le côté d'un véhicule utilitaire et véhicule utilitaire avec système de détection permettant de réaliser le procédé

(30) Priorität: 04.08.2011 DE 102011109459
(43) Veröffentlichungstag der Anmeldung: 06.02.2013
(73) Patentinhaber: MAN Truck & Bus AG, 80995 München (DE)
(72) Erfinder: Dörner, Karlheinz, 85757 Karlsfeld (DE); Schwertberger, Walter, 82278 Althegnenberg (DE); Resch, Christoph, 80637 München (DE); Kraus, Sven, 85748 Garching (DE); Echtler, Johannes, 86975 Bernbeuren (DE)
(74) Vertreter: Liebl, Thomas

(56) Entgegenhaltungen:
- WO-A1-02/43982
- DE-A1-102007 059 735
- DE-A1-102008 013 457
- US-A1- 2003 085 806
- US-A1- 2005 206 225

## Beschreibung

Die vorliegende Erfindung betrifft ein Verfahren zum Erfassen von Objekten seitlich eines Nutzfahrzeugs sowie mit einem Nutzfahrzeug, aufweisend ein Erfassungssystem.

Bei Nutzfahrzeugen, insbesondere LKW (Lastkraftwagen), ist die Rundumsicht für den Führer des Nutzfahrzeugs gegenüber PKW (Personenkraftwagen) deutlich eingeschränkt. Insbesondere ist die rechte Fahrzeugseite bei links gesteuerten Fahrzeugen nur sehr beschränkt einsehbar. Demzufolge wurden die gesetzlichen Bestimmungen in Europa dahingehend verschärft, dass die Nutzfahrzeuge mit Sensoren ausgestattet werden müssen. Dazu gibt es Bestrebungen, Nutzfahrzeuge seitlich mit Ultraschallsensoren auszustatten, um über eine Distanzmessung den Fahrer vor Objekten im Sensorbereich zu warnen. Ein solches System ist z.B. aus der DE 10 2009 041 556 A1 bekannt. Nachteilig ist hierbei die notwendige hohe Anzahl an Sensoren und deren komplexe Verschaltung. All diesen Systemen ist aber gemein, dass dem Führer des Nutzfahrzeugs lediglich rudimentäre Daten zur Verfügung gestellt werden, aufgrund derer der Führer des Nutzfahrzeugs die richtigen Entscheidungen treffen muss. Jedoch sind Führer von Nutzfahrzeugen ohnehin durch eine Menge von Informationen ständig hoch beansprucht. Daher wäre es vorteilhaft, den Führer eines Nutzfahrzeugs in Hinsicht auf kollisionsgefährdete Objekte im seitlichen Bereich des Nutzfahrzeugs zu entlasten.

Die Nachteile des Stands der Technik sollen durch ein Verfahren zum Erfassen von Objekten seitlich eines Nutzfahrzeugs sowie durch ein Nutzfahrzeug aufweisend ein Erfassungssystem zum Ausführen des erfindungsgemäßen Verfahrens zumindest teilweise behoben werden. Die Aufgabe wird gelöst durch die Merkmale der unabhängigen Patentansprüche. Vorteilhafte Weiterbildungen sind Gegenstand der abhängigen Patentansprüche.

Gemäß der vorliegenden Erfindung wird ein Verfahren zum Erfassen von Objekten seitlich eines Nutzfahrzeugs vorgeschlagen, wobei zumindest die folgenden Schritte ausgeführt werden:
- mit mindestens einer Kamera werden in einem an einer Seite eines Nutzfahrzeugs liegenden Sektor befindliche Objekte erfasst;
- in einer Auswerteeinheit werden die erfassten Objekte bewertet, wobei eine Lage der erfassten Objekte relativ zum Nutzfahrzeug ermittelt und eine Kollisionsgefahr mit dem Nutzfahrzeug bewertet; und
- an eine Wiedergabeeinheit wird im Falle einer Kollisionsgefahr von der Auswerteeinheit eine Information übermittelt, auf die hin die Wiedergabeeinheit ein Warnsignal ausgibt.

Mit Objekten sind an dieser Stelle sowohl bewegliche Objekte, allgemein als Verkehrsteilnehmer bezeichnet, als auch unbewegliche Gegenstände gemeint, die den Fahrbereich bzw. den Rangierbereich des Nutzfahrzeugs einschränken. Der durch die mindestens eine Kamera erfasste, insbesondere tangential, zu einer Seite des Nutzfahrzeugs liegende Sektor ist ein Bereich, der in Abwägung zwischen dem Aufwand zur Ausleuchtung eines Bereichs und der potentiellen Relevanz für den Führer des Nutzfahrzeugs vorbestimmt ist. In aller Regel wird dieser Sektor durch die Positionierung der zumindest einen Kamera am Nutzfahrzeug bestimmt. Er kann aber auch durch die Auswerteeinheit auf einen eingeschränkten Bereich des durch eine Kamera erfassten Bereichs darstellen. Die Auswerteeinheit besteht in aller Regel wenigstens aus einem Prozessor, einer Speichereinheit, einer Eingabeeinheit und einer Ausgabeeinheit. Die Bilder, die von der mindestens einen Kamera erstellt werden, werden über die Eingabeeinheit an die Auswerteeinheit weitergegeben. Diese Bilddaten können auch aus datenökonomischen Gründen auf solche Bildsequenzen bzw. Bildabschnitte beschränkt sein, die sich gegenüber einem vorigen Bild verändert haben. Dies ist aus dem MPEG-Standard bekannt und führt je nach Höhe der Bildfrequenz zu drastischen Dateneinsparungen.

In der Auswerteeinheit werden nun die erfassten Objekte bewertet. Bei dieser Bewertung wird insbesondere verglichen, ob das erfasste Objekt bereits aus vorigen Bilddaten bekannt ist. In einem nachfolgenden oder zeitgleichen Schritt wird die Lage des erfassten Objekts relativ zum Nutzfahrzeug ermittelt. In der Regel sind die Objekte, die im Straßenverkehr häufig vorkommen, in ihrer Vielfalt beschränkt, so dass z.B. die Größe des Objekts bestimmbar oder zumindest abschätzbar ist. Da die Lage der mindestens einen Kamera in Bezug auf das Nutzfahrzeug bekannt ist, kann bereits auf diesen Daten beruhend die Lage des erfassten Objekts relativ zum Nutzfahrzeug bestimmt werden. Es kann aber durch mindestens eine weitere Kamera in einer anderen Position am Nutzfahrzeug durch Triangulation festgestellt werden, wo sich das erfasste Objekt relativ zum Nutzfahrzeug befindet. Anschließend wird aufgrund dieser ermittelten Daten eine Kollisionsgefahr mit dem Nutzfahrzeug ermittelt. Hierbei wird insbesondere eine tatsächliche und/oder zukünftig wahrscheinliche Bewegungsrichtung des Nutzfahrzeugs zugrunde gelegt. Z.B. ist bei überlangen Lastkraftwagen, wie z.B. dem EuroCombi, aufgrund des vergrößerten Nachzugradius der langen Anhänger eine Kollision mit Bordsteinen und Begrenzungspollern insbesondere im Stadtverkehr besonders zu berücksichtigen.

Ermittelt die Auswerteeinheit eine solche Kollisionsgefahr, so wird eine Information erstellt, die über die Ausgabeeinheit der Auswerteeinheit an die Wiedergabeeinheit weitergegeben wird. Solche Informationen können eine veränderte Wiedergabe von Bilddaten über die Wiedergabeeinheit bewirken, ein akustisches Signal über die Wiedergabeeinheit auslösen, und/ oder aber über eine Krafteinleitung auf das Lenkrad den Führer des Nutzfahrzeugs über diese Wiedergabeeinheit auf die kollisionsgefährdeten Objekte aufmerksam machen. Demnach ist ein solches Warnsignal der Wiedergabeeinheit insbesondere akustisch, optisch und/oder haptisch. Auch kann der Ort der Wiedergabe des Warnsignals im Führerhaus des Nutzfahrzeugs dem Führer des Nutzfahrzeugs bereits einen Hinweis darauf geben, in welchem Bereich sich das kollisionsgefährdete Objekt befindet, so dass z.B. der Führer des Nutzfahrzeugs dazu angeleitet wird, auf den entsprechenden Bildschirm bzw. Spiegel zu schauen und unmittelbar eine Aktion einzuleiten, die eine Kollision verhindert.

In einer weiteren vorteilhaften Ausführungsform des Verfahrens wird über ein Stereokamerasystem ein räumliches Bild erzeugt und die Auswerteeinheit verarbeitet nur räumliche Objekte.

Es hat sich herausgestellt, dass Warnsignale, die auf fehlerhaften Informationen beruhen, nicht nur zu keiner Verbesserung der Übersicht durch den Führer des Nutzfahrzeugs führen, sondern mitunter zu einer Verschlechterung, weil der Führer des Nutzfahrzeugs den Warnsignalen - die zudem in einem solchen Fall übermäßig häufig sind - nicht mehr vertraut und möglicherweise nicht mehr beachtet. Es ist daher notwendig, z.B. einen Schatten von tatsächlichen (räumlichen) Objekten bereits im Vorfeld zu unterscheiden. Bei einer geeigneten. Verschaltung einer Mehrzahl von Kameras (Stereokamerasystem), die zur Aufnahme von räumlichen Bildern z.B. auf einer Höhe beabstandet zueinander einen sich zumindest überschneidenden Sektor erfassen, können die Bilddaten auf solche Teile beschränkt werden, die lediglich räumliche Objekte umfassen. Insbesondere nur solche räumlichen Objekte, die im Sinne des MPEG-Standards ihre Lage im Sektor gegenüber einem vorherigen Bild verändert haben. Dadurch kann ebenfalls die Auswerteeinheit deutlich entlastet werden.

In einer weiteren vorteilhaften Ausführungsform des Verfahrens weist mindestens ein Anhänger eine relative Position zu einem Führerhaus des Nutzfahrzeugs auf, wobei diese relative Position erfasst und bei der Ermittlung einer Kollisionsgefahr berücksichtigt wird. Dabei wird der mindestens eine Anhänger bevorzugt durch zumindest eine Kamera erfasst.

Nutzfahrzeuge, insbesondere LKW, zeichnen sich durch eine lange Ladefläche aus, die hier verallgemeinert als Anhänger bezeichnet wird. Viele LKW haben einen beweglichen Anhänger, den sie z.B. als Sattelschlepper ziehen. Auch können zwei solcher beweglichen Anhänger vorgesehen sein. Durch den langen Radstand ziehen die hinteren Achsen eines Nutzfahrzeugs gegenüber der oft allein gelenkten Vorderachse einen deutlich flacheren Radius. Es ist also nicht gewährleistet, dass ein Nutzfahrzeug, das ein Hindernis mit der Vorderachse umfahren hat, dies auch mit der Hinterachse bzw. der hintersten Achse erreicht. Durch die Erfassung der Lage des Anhängers und seiner relativen Position zu dem Führerhaus des Nutzfahrzeugs kann mit einfachen Mitteln der voraussichtlich gefahrene Radius in die Abschätzung der Kollisionsgefahr mit einbezogen werden. Hierdurch können nicht nur Beschädigungen am Nutzfahrzeug durch das Überfahren eines Bordsteins, sondern auch häufige Unfälle mit anderen Verkehrsteilnehmern, insbesondere Fahrradfahrern, vermieden werden. Die relative Position des Anhängers kann mit verschiedenen Arten von Sensoren ermittelt werden. Z.B. kann in der Anhängerkupplung ein Drehsensor die Lage des Anhängers indirekt ermitteln. Bevorzugt wird aber die relative Position des Anhängers durch zumindest eine der installierten Kameras erfasst, die beim Erfassen des neben dem Nutzfahrzeug liegenden Sektors auch einen Teil des Nutzfahrzeugs (des Anhängers) erfasst. Insbesondere kann das Nutzfahrzeug mit optischen Positionsmarkern ausgestattet sein, die nach oben beschriebener Art die Bilddatenmenge auf ein Minimum reduziert, wenn die Daten über den Anhänger zumindest für die Bildverarbeitung in der Auswerteeinheit generell unterdrückt werden.

In einer weiteren vorteilhaften Ausführungsform des Verfahrens wird in Abhängigkeit von zumindest einem der folgenden Faktoren:
- Klassifikation vom erfassten Objekt, wobei die Klassifikation von der Auswerteeinheit erstellt wird; und
- Fahrzustand des Nutzfahrzeugs
eine Information verändert oder unterdrückt, und angepasst an die veränderte Information das Warnsignal ausgegeben.

Wie bereits erwähnt, ist die Anzahl von Objekten im Straßenverkehr ggf. auf eine beherrschbare Anzahl von in der Realität häufigen Objekten begrenzt. Daher ist es sinnvoll, die möglichen Objekte zu klassifizieren, wodurch z.B. mögliche Bewegungsrichtungen von den klassifizierten Objekten bereits im Vorhinein eingeschränkt sind. So ist z.B. klar, dass die Fahrtrichtung von anderen Fahrzeugen nicht (unmittelbar) seitwärts zur aktuellen Ausrichtung geändert werden kann. Ein Mensch oder ein Tier kann hingegen seine Bewegungsrichtung unvermittelt verändern. Weiterhin ist es sinnvoll, den Fahrzustand des Nutzfahrzeugs zu beachten, weil sich z.B. beim stehenden Nutzfahrzeug kaum Gefahren ergeben können. Im entgegengesetzten Fall sind bei schneller Fahrt (z.B. von mehr als 40 km/h) scharfe Lenkeinschläge (z.B. von mehr als 45°) durch den Führer des Nutzfahrzeugs nicht zu erwarten. Wohl aber sind bei solchen Geschwindigkeiten scharfe Bremsungen und abrupte Lenkmanöver z.B. bei Auffahrgefahr deutlich wahrscheinlicher bei langsamer Fahrt. Daher müssen dann auch weiter entfernte Objekte als kollisionsgefährlich eingeschätzt werden als im langsamen Fahrzustand. Die Veränderung der Information kann z.B. zu einer veränderten Wiedergabe von einem Warnsignal führen. Z.B. ist es für den Führer des Nutzfahrzeugs mitunter störend, akustisch gewarnt zu werden, wenn während des Stehens an einer Ampel lediglich vor einem heranrollenden PKW gewarnt wird. In einem solchen Fall reicht z.B. eine aufblinkende Warnleuchte vollkommen aus. D.h. die Information wird in der Auswerteeinheit dahingehend verändert, dass aufgrund der geringen Kollisionsgefahr nur eine optische Wiedergabe des Warnsignals ausgelöst wird. Während schneller Fahrt z.B. auf der Autobahn wird die Information über einen heranrollenden PKW wegen der hohen Kollisionsgefahr beim Spurwechsel z.B. zu einem akustischen Warnsignal führen, obgleich die erfasste Relativgeschwindigkeit zwischen dem Nutzfahrzeug und dem heranrollenden PKW gleich ist. Über eine solche Warnleuchte wird dem Führer des Nutzfahrzeugs dann auch angezeigt, dass die Systeme zum Erfassen von Objekten seitlich des Nutzfahrzeugs aktiv und funktionstüchtig sind. Auch würde ein Warnsignal in Form eines Lenkwiderstands im Stand vom Führer des Nutzfahrzeugs nicht registriert. Hingegen würde bei schneller Fahrt z.B. die Kombination aus einem akustischen Signal und einem Lenkwiderstand die nötige unmittelbare Aufmerksamkeit des Führers des Nutzfahrzeugs auf die Kollisionsgefahr bewirken.

Im Rahmen der Erfindung ist auch ein Nutzfahrzeug, aufweisend ein Erfassungssystem zum Ausführen des erfindungsgemäßen Verfahrens angegeben, wobei das Erfassungssystem mindestens eine Kamera aufweist, die an einer Seite des Nutzfahrzeugs anordbar ist, sowie eine Auswerteeinheit und mindestens eine Wiedergabeeinheit. Dabei ist das Erfassungssystem insbesondere so ausgeführt und eingerichtet, dass es das erfindungsgemäße Verfahren mit einer vorhandenen Kamera, einer Auswerteeinheit und einer Wiedergabeeinheit ausführen kann.

Die Kamera ist insbesondere ein optischer Bildnehmer, der insbesondere das sichtbare Licht abdeckt. Die Kamera ist dabei an einer Seite des Nutzfahrzeugs anordbar, so dass der obig beschriebene Sektor umfasst oder exakt erfasst ist. Dabei ist es unerheblich, in welcher Höhe ausgehend vom Unterboden die mindestens eine Kamera angebracht wird. Vorteilhafterweise aber wird die Höhe des Nutzfahrzeugs genutzt, die andere Verkehrsteilnehmer deutlich überragt, um mit wenigen Mitteln eine gute Erfassung der Umgebung zu erreichen. Die Auswerteeinheit und Wiedergabeeinheit können nach obiger Beschreibung ausgeführt sein und sind miteinander drahtlos und/oder kabelgebunden in Datenkontakt.

In einer weiteren vorteilhaften Ausführungsform des Nutzfahrzeugs weist das Erfassungssystem mindestens ein Stereokamerasystem auf, das denselben Sektor aus unterschiedlichen Positionen erfasst. Bevorzugt ist weiter, dass das Stereokamerasystem auch das Infrarotspektrum erfasst und insbesondere mit einer Infrarotleuchte ausgestattet ist.

Mit einem Stereokamerasystem ist insbesondere gemeint, dass zwei Kameras so eingerichtet sind, dass sie in einer Anordnung nach Art der menschlichen Augen ein räumliches Bild erfassen. Sie können aber auch in andersartiger Anordnung durch Triangulation mit überschneidenden Bilddaten ein räumliches Bild erfassen. Insbesondere erfasst zumindest eine Kamera den nahen Infrarotbereich. Hierfür sind insbesondere Bildsensoren auf Basis der CMOS-Technologie geeignet, die ein breiteres elektromagnetisches Spektrum abdecken als das menschliche Auge und zugleich über ein breiteres Beleuchtungsspektrum sensibel sind, wodurch für das menschliche Auge ungünstige Lichtverhältnisse keine Probleme für einen solchen Bildsensor darstellen. Dies ist insbesondere bei starkem Sonnenschein bzw. tief stehender Sonne insbesondere bei Tunneleinfahrten und Tunnelausfahrten und sonstigen scharfkantigen Schattenbereichen hilfreich. Für schattige Bereiche und Nachtfahrten ist es besonders vorteilhaft, das Erfassungssystem mit Infrarotleuchten auszustatten, wodurch bei jeglichen Lichtverhältnissen gewährleistet ist, dass die Kameras ein ausreichend genaues Bild des Sektors erfassen können, und zugleich andere Verkehrsteilnehmer nicht geblendet werden.

In einer weiteren vorteilhaften Ausführungsform des Nutzfahrzeugs umfasst die mindestens eine Wiedergabeeinheit wenigstens eine der folgenden Komponenten:
- akustischer Signalgeber,
- Wamleuchte,
- Bildschirm mit farblicher Hervorhebung von erfassten Objekten, und
- Krafteinleitung am Lenkrad des Nutzfahrzeugs.

Der akustische Signalgeber kann nach Art eines sogenannten Surround-Systems eingerichtet sein, durch die dem Führer des Nutzfahrzeugs unmittelbar eine Lageangabe des kollisionsgefährdeten Objekts möglich ist. Jedoch reicht unter Umständen allein oder in Kombination mit anderen Wiedergabeeinheiten ein einfaches Warnsignal aus, wie es aus Einparkhilfen bekannt ist. In gleicher Weise kann eine Warnleuchte lediglich zentral im Hauptblickfeld des Führers des Nutzfahrzeugs liegen oder aber verteilt im Führerhaus angeordnet sein, so dass z.B. die Aufmerksamkeit auf einen bestimmten Rückspiegel gezogen wird. Weiterhin vorteilhaft ist ein Bildschirm zur Wiedergabe des Sektors, bei dem kollisionsgefährdete Objekte farblich hervorgehoben werden, so dass die Aufmerksamkeit des Führers des Nutzfahrzeugs auf die Objekte gezogen wird. Insbesondere kann durch farbliche Abstufung, z.B. von grün (keine Kollisionsgefahr) bis rot (akute Kollisionsgefahr), der Objekte ein Gefährdungspotential unmittelbar erfassbar für einen Führer des Nutzfahrzeugs werden. Eine Wiedergabe der Kollisionsgefahr in Form einer Krafteinleitung auf das Lenkrad des Nutzfahrzeugs stellt einen drastischen Eingriff in das Beherrschen des Nutzfahrzeugs dar. Jedoch kann in besonders gefährlichen Situationen eine solche Maßnahme sinnvoll sein.

In einer weiteren vorteilhaften Ausführungsform des Nutzfahrzeugs ist die zumindest eine Kamera im Bereich der Blickfeldhöhe eines Führers des Nutzfahrzeugs angeordnet.

Dies hat insbesondere den Vorteil, dass die Kameras einen Sektor so aufnehmen, wie ein Führer eines Nutzfahrzeugs es erwartet. Auch wenn mitunter Aufnahmen aus anderen Blickwinkeln eine bessere Ausleuchtung erzielen können, erfordern diese ein Umdenken vom Führer des Nutzfahrzeugs und sind daher in akuten Gefährdungssituationen ggf. für ungeübte Nutzer problematisch. Auch ist eine Umrechnung von Bilddaten für den Gebrauch mit Nutzfahrzeugen meist unverhältnismäßig.

In einer weiteren vorteilhaften Ausführungsform des Nutzfahrzeugs weist das Nutzfahrzeug eine mittige Achse auf, die parallel zur Fahrtrichtung verläuft, und durch ein einziges Stereokamerasystem der Sektor überwacht wird, wobei der Sektor in Bezug auf die mittige Achse der Seite eines Führersitzes des Nutzfahrzeugs gegenüberliegt.

Diese gegenüberliegende Seite stellt meist den Bereich dar, in den der Führer des Nutzfahrzeugs vom Führersitz nicht oder nur schlecht einsehen kann. Bei links gesteuerten Fahrzeugen ist dies die rechte Seite und bei rechts gesteuerten Fahrzeugen die linke Seite. Bei dieser Anordnung ist insbesondere die Überwachung der Lage des Anhängers einfach in die Überwachung des Sektors einbindbar.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: ein Nutzfahrzeug in Kollisionskurs, und
- Fig. 2:: eine Anordnung eines Stereokamerasystems in Blickfeldhöhe eines Führers des Nutzfahrzeugs.

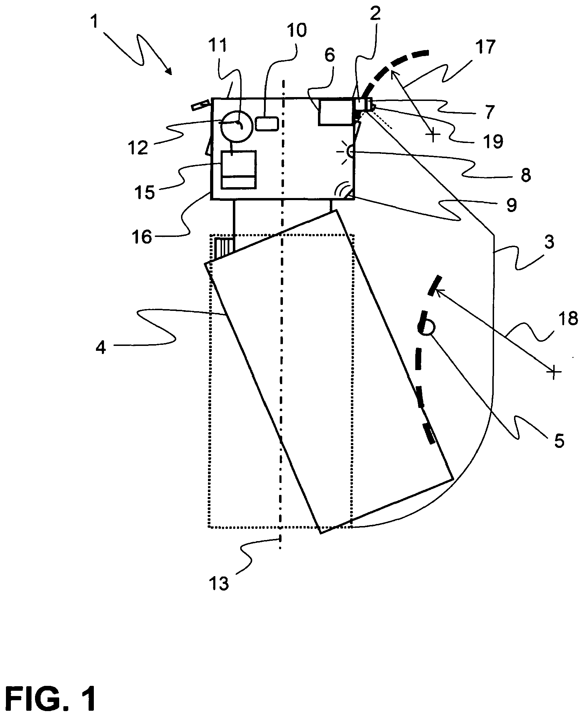

Fig. 1 zeigt ein Nutzfahrzeug 1 in Draufsicht, das durch den eingeschlagenen Lenkradius 17 Gefahr läuft, mit dem Objekt 5 im Sektor 3 mit dem Anhänger 4 durch den deutlich flacheren Nachzugradius 18 zu kollidieren. Das Objekt 5 wird von der Kamera 2 - bei Nacht mithilfe der Infrarotleuchte 7 - erfasst und an die Auswerteeinheit 6 übermittelt. In diesem Beispiel erfasst die Auswerteeinheit 6 zudem den beabsichtigten Lenkradius 17 und errechnet eine Kollisionsgefährdung mit dem Objekt 5, hier z.B. ein Pfosten. Daraufhin wird über zumindest eine der Wiedergabeeinheiten Warnleuchte 8, akustischer Signalgeber 9, Bildschirm 10 oder Krafteinleitung 11 auf das Lenkrad 12 an den Führer des Nutzfahrzeugs 1 wiedergegeben. Über den Spiegel 19 oder den Bildschirm 10 ist der Führer des Nutzfahrzeugs in der Lage das kollisionsgefährdete Objekt 5 erfassen und entsprechend darauf reagieren. Bei einer Krafteinleitung 11, die hier entgegen der Lenkrichtung gemäß dem Lenkradius 17 und Nachzugradius 18 eingezeichnet ist, wird dem Führer des Nutzfahrzeugs 1 auf dem Führersitz 15 im Führerhaus 16 über die Veränderung des Lenkverhaltens über das Lenkrad 12 unmittelbar angezeigt, dass z.B. ein weiteres Einschlagen bzw. Halten des Einschlagwinkels mittels des Lenkrads 12 zu einer Kollision führt. Aus der schematischen Darstellung in Fig. 1 wird klar, dass der Führer des Nutzfahrzeugs 1 von dem Führersitz 15 auch mithilfe des rechten Außenspiegels 19 nur schlecht in den Sektor 3 einsehen kann, da die Hälfte des Nutzfahrzeugs 1, die in diesem Fall rechts von der mittigen Achse 13 liegt, einsehen kann, wodurch dieser Bereich besonderer Überwachung bedarf.

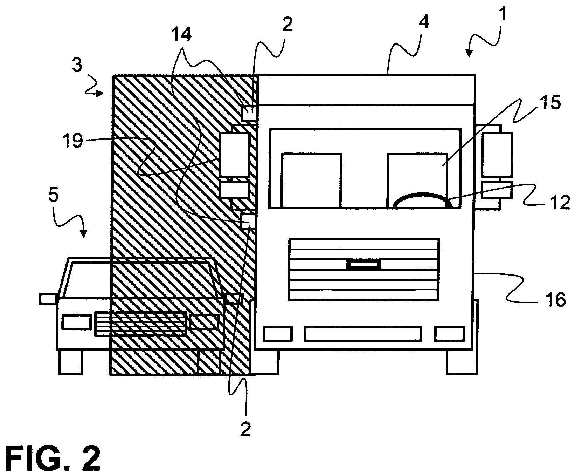

In Fig. 2 ist ein Nutzfahrzeug 1 in Frontalansicht gezeigt. Oberhalb des Führerhauses 16 ist der Anhänger 4 zu erkennen. Der Anhänger 4 kann auch nicht gelenkig, das heißt unbeweglich relativ zum Führerhaus 16 mit diesem verbunden sein. Im Inneren des Führerhauses 16 ist der Führersitz 15 und das davor liegende Lenkrad 12 zu erkennen. Auf der in Bezug auf die Blickrichtung des Führers des Nutzfahrzeugs 1 rechten Seite des Nutzfahrzeugs 1 sind zwei Kameras 2 unterhalb und oberhalb des rechten Außenspiegels 19 angeordnet, die ein Stereokamerasystem 14 bilden und auf den tangentialen Sektor 3 gerichtet sind. Ein Objekt 5, hier ein herannahender PKW, wird von dem Stereokamerasystem 14 im Sektor 3 erfasst und dem Führer des Nutzfahrzeugs 1 wird ein angemessenes Warnsignal über eine der Wiedergabeeinheiten angezeigt.

Damit löst die Erfindung zumindest teilweise die im Zusammenhang mit dem Stand der Technik geschilderten technischen Probleme. Insbesondere wird ein Verfahren zum Erfassen von Objekten seitlich eines Nutzfahrzeugs und ein Nutzfahrzeug aufweisend ein Erfassungssystem zum Ausführen des erfindungsgemäßen Verfahrens vorgeschlagen, mit dem der Führer eines Nutzfahrzeugs in Hinsicht auf die Relevanz von Objekten entlastet wird.

### Bezugszeichenliste

- 1: Nutzfahrzeug
- 2: Kamera
- 3: Sektor
- 4: Anhänger
- 5: Objekt
- 6: Auswerteeinheit
- 7: Infrarotleuchte
- 8: Warnleuchte
- 9: Akustischer Signalgeber
- 10: Bildschirm
- 11: Krafteinleitung
- 12: Lenkrad
- 13: Mittige Achse
- 14: Stereokamerasystem
- 15: Führersitz
- 16: Führerhaus
- 17: Lenkradius
- 18: Nachzugradius
- 19: Rechter Außenspiegel

## Patentansprüche

1. Verfahren zum Erfassen von Objekten seitlich eines Nutzfahrzeugs, wobei zumindest die folgenden Schritte ausgeführt werden:
- mit mindestens einer Kamera (2) werden in einem an einer Seite eines Nutzfahrzeugs (1) liegenden Sektor (3) befindliche Objekte (5) erfasst;
- in einer Auswerteeinheit (6) werden die erfassten Objekte (5) bewertet, wobei eine Lage der erfassten Objekte (5) relativ zum Nutzfahrzeug (1) ermittelt und eine Kollisionsgefahr mit dem Nutzfahrzeug (1) bewertet wird; und
- an eine Wiedergabeeinheit (8, 9, 10, 11) wird im Falle einer Kollisionsgefahr von der Auswerteeinheit (6) eine Information übermittelt, auf die hin die Wiedergabeeinheit (8, 9, 10, 11) ein Warnsignal ausgibt,
wobei ein Stereokamerasystem (14) ein räumliches Bild erzeugt, **dadurch gekennzeichnet, dass** die Auswerteeinheit (6) nur solche räumlichen Objekte (5) verarbeitet, die im Sinne des MPEG-Standards ihre Lage im Sektor (3) gegenüber einem vorherigen Bild verändert haben, und dass in Abhängigkeit von den folgenden Faktoren:
- Klassifikation vom erfassten Objekt (5), wobei die Klassifikation von der Auswerteeinheit (6) erstellt wird; und
- Fahrzustand des Nutzfahrzeugs (1)
eine Information verändert oder unterdrückt wird, und angepasst an die veränderte Information das Warnsignal ausgegeben wird dergestalt, dass der Ort der Wiedergabe des Warnsignals in einem Führerhaus des Nutzfahrzeugs dem Führer des Nutzfahrzeugs einen Hinweis darauf gibt, in welchem Bereich sich das kollisionsgefährdete Objekt befindet.

2. Verfahren nach Anspruch 1, **dadurch gekennzeichnet, dass** mindestens ein Anhänger (4) eine relative Position zu einem Führerhaus (16) des Nutzfahrzeugs (1) aufweist, wobei diese relative Position erfasst und bei der Ermittlung einer Kollisionsgefahr berücksichtigt wird.

## Claims

1. Method for detecting objects at the side of a commercial vehicle, wherein at least the following steps are carried out:
- at least one camera (2) is used to detect objects (5) located in a sector (3) situated on a side of a commercial vehicle (1);
- the detected objects (5) are rated in an evaluation unit (6), with a position of the detected objects (5) relative to the commercial vehicle (1) being ascertained and a risk of collision with the commercial vehicle (1) being rated; and
- a piece of information is transmitted to a reproduction unit (8, 9, 10, 11) by the evaluation unit (6) in the event of a risk of collision, to which the reproduction unit (8, 9, 10, 11 ) responds by outputting a warning signal,
wherein a stereo camera system (14) produces a three-dimensional image, **characterized in that** the evaluation unit (6) processes only such three-dimensional objects (5) as, within the context of the definition of the MPEG standard, have changed their position in the sector (3) relative to a previous frame, and **in that** on the basis of the following factors:
- classification of the detected object (5), the classification being produced by the evaluation unit (6); and
- driving state of the commercial vehicle (1)
are taken as a basis for altering or suppressing a piece of information, and, in the manner customized to the altered information, the warning signal is output such that the location of the reproduction of the warning signal in a cab of the commercial vehicle provides the driver of the commercial vehicle with an indication of the area in which the object at risk of collision is located.

2. Method according to Claim 1, **characterized in that** at least one trailer (4) has a relative position in relation to a cab (16) of the commercial vehicle (1), this relative position being detected and being taken into consideration when ascertaining a risk of collision.

## Revendications

1. Procédé de détection d'objets situés sur le côté d'un véhicule utilitaire, dans lequel au moins les étapes suivantes sont effectuées :
- des objets (5) se trouvant dans un secteur (3) situé sur un côté d'un véhicule utilitaire (1) sont détectés au moyen d'une caméra (2) ;
- les objets détectés (5) sont évalués dans une unité d'évaluation (6), une position des objets détectés (5) par rapport au véhicule utilitaire (1) étant déterminée et un risque de collision avec le véhicule utilitaire (1) étant évalué ; et
- une information est transmise par l'unité d'évaluation (6) à une unité de reproduction (8, 9, 10, 11) en cas de risque de collision, information sur la base de laquelle l'unité de reproduction (8, 9, 10, 11) délivre un signal d'alarme,
dans lequel un système de caméra stéréoscopique (14) génère une image spatiale, **caractérisé en ce que** l'unité d'évaluation (6) ne traite que les objets spatiaux (5) dont la position dans le secteur (3) par rapport à l'image précédente a varié au sens de la norme MPEG, et **en ce qu'**une information est modifiée ou supprimée en fonction des facteurs suivants :
- classification de l'objet détecté (5), la classification étant réalisée par l'unité d'évaluation (6), et
- état de marche du véhicule utilitaire (1),
et le signal d'alarme est délivré de manière adaptée à l'information modifiée afin que l'emplacement de la reproduction du signal d'alarme indique au conducteur du véhicule utilitaire dans un habitacle pour conducteur du véhicule utilitaire, la zone dans laquelle se trouve l'objet présentant un risque de collision.

2. Procédé selon la revendication 1, **caractérisé en ce qu'**au moins une remorque (4) présente une position relative par rapport à l'habitacle pour conducteur (16) du véhicule utilitaire (1), dans lequel ladite position relative est détectée et est prise en compte lors de la détermination d'un risque de collision.
